# EUROPÄISCHE PATENTSCHRIFT

(11) **EP 3 444 482 B1**
(45) Veröffentlichungstag und Bekanntmachung des Hinweises auf die Patenterteilung: **08.09.2021**
(21) Anmeldenummer: 18189531.9
(22) Anmeldetag: 25.07.2013
(51) Int. Cl.: F15B 1/027, B60G 17/056

(54) **EINRICHTUNG ZUM STEUERN DES LADEZUSTANDES MINDESTENS EINES DRUCKSPEICHERS**
DEVICE FOR CONTROLLING THE CHARGE STATE OF AT LEAST ONE PRESSURE ACCUMULATOR
DISPOSITIF DE COMMANDE DE L'ÉTAT DE CHARGE D'AU MOINS UN ACCUMULATEUR DE PRESSION

(30) Priorität: 17.08.2012 DE 102012016457
(43) Veröffentlichungstag der Anmeldung: 20.02.2019
(62) Teilanmeldung aus: 13003721.1
(73) Patentinhaber: HYDAC Systems & Services GmbH, 66280 Sulzbach (DE)
(72) Erfinder: Huth, Heinz-Peter, 66802 Überherrn (DE); Honsbein, Rüdiger, 66822 Lebach-Dörsdorf (DE)
(74) Vertreter: Bartels und Partner, Patentanwälte

(56) Entgegenhaltungen:
- EP-A2- 2 375 086
- WO-A1-2008/088044
- DE-A1- 19 652 684
- DE-A1- 19 743 005

## Beschreibung

Die Erfindung betrifft ein Hydrauliksystem mit einer Einrichtung zum Steuern des Ladezustandes mindestens eines Druckspeichers mit den Merkmalen im Oberbegriff von Anspruch 1.

Bei Hydrauliksystemen, die zur Druckversorgung unterschiedlicher Verbraucher, wie Arbeitszylinder, hydraulischer Brems- oder Lenksysteme oder hydropneumatischer Federungssysteme, vorgesehen sind und bei denen mit der betreffenden Arbeitsleitung ein Druckspeicher verbindbar ist, ist es im Allgemeinen erforderlich, den Ladezustand, d.h. das Druckniveau des betreffenden Speichers, an den jeweiligen Betriebszustand des Systems anzupassen. U.a. gilt dies im besonderen Maße beispielsweise bei hydropneumatischen Federungssystemen, die bei mobilen Arbeitsgerätschaften wie Teleskopladern oder Baggern zum Einsatz kommen, wo es bei bestimmten Arbeitssituationen erforderlich ist, die Federung zu sperren. Im Hinblick auf die Betriebssicherheit ist es unumgänglich, den Ladezustand des Speichers an den jeweils herrschenden Lastdruck der Arbeitsleitung anzupassen, um sicherzustellen, dass bei einer nach dem Sperren erfolgenden Aktivierung der Federung keine Drucksprünge auftreten.

Die DE 196 52 684 A1 beschreibt eine Einrichtung zum Steuern des Ladezustandes mindestens eines Druckspeichers mit den Merkmalen im Oberbegriff von Anspruch 1, der Bestandteil eines Hydrauliksystems ist, das eine mit dem jeweiligen Speicher verbindbare Arbeitsleitung zur Druckversorgung eines Verbrauchers und einen Lade- und Ablasskreis für wahlweises Verbinden des jeweiligen Speichers mit einer Druckquelle für einen Ladevorgang oder mit einem Tank für einen Ablassvorgang aufweist, wobei der Lade- und Ablasskreis eine Druckwaage aufweist, deren Steuerkolben aus einer zentralen Sperrstellung in eine den betreffenden Speicher mit der Druckquelle verbindende Ladestellung oder in eine diesen mit dem Tank verbindende Ablassstellung auslenkbar ist, wobei der Kolben der Druckwaage einerseits mit einem mit dem Druck des Speichers in Bezug stehenden und andererseits mit einem mit dem Druck der Arbeitsleitung in Bezug stehenden Steuerdruck beaufschlagbar ist, wobei die eine Seite des Steuerkolbens der Druckwaage über eine erste Steuerleitung mit dem jeweiligen Druckspeicher in Verbindung ist und wobei die andere Seite des Steuerkolbens über eine zweite Steuerleitung mit der Arbeitsleitung oder mit einem Anschluss für die Zufuhr eines extern generierten, mit dem Lastdruck der Arbeitsleitung in Bezug stehenden Steuerdruckes verbindbar ist.

Weitere Einrichtungen zum Steuern des Ladezustandes mindestens eines Druckspeichers gehen aus der DE 197 43 005 A1, der EP 2 375 086 A2 und der WO 2008/088044 A1 hervor.

Im Hinblick auf diese Problematik liegt der Erfindung die Aufgabe zugrunde, eine Einrichtung zur Verfügung zu stellen, die mit geringem Aufwand eine betriebssichere Steuerung des Ladezustandes eines betreffenden Druckspeichers in Anpassung an die betrieblichen Erfordernisse des zugehörigen Hydrauliksystems ermöglicht.

Erfindungsgemäß ist diese Aufgabe durch eine Einrichtung gelöst, die die Merkmale des Patentanspruches 1 in seiner Gesamtheit aufweist.

Nach dem kennzeichnenden Teil des Anspruches 1 besteht eine wesentliche Besonderheit der Erfindung darin, dass der Lade- und Ablasskreis ein erstes Steuerventil, über das die Druckquelle mit dem Druckanschluss der Druckwaage verbindbar ist, und ein zweites Steuerventil aufweist, über das der Tankanschluss der Druckwaage mit dem Tank verbindbar ist; dass ein erster Drucksensor, der den am Steuerkolben der Druckwaage herrschenden Druck der ersten Steuerleitung erkennt, sowie ein zweiter Drucksensor vorgesehen sind, der den am Steuerkolben herrschenden Druck der zweiten Steuerleitung erkennt; und dass erstes und zweites Steuerventil mittels Schaltsignalen betätigbar sind, die aufgrund der von erstem und zweitem Drucksensor erkannten Druckwerte generiert sind.

Es ist erfindungsgemäss vorgesehen, dass der Lade- und Ablasskreis eine Druckwaage aufweist, deren Steuerkolben aus einer zentralen Sperrstellung in eine den betreffenden Speicher mit der Druckquelle verbindenden Ladestellung oder in eine diesen mit dem Tank verbindende Ablassstellung auslenkbar ist, wobei der Kolben der Druckwaage einerseits mit einem mit dem Speicherdruck in Bezug stehenden und andererseits mit einem mit dem Druck der Arbeitsleitung in Bezug stehenden Steuerdruck beaufschlagbar ist. Mit geringem Steuerungsaufwand lässt sich dadurch das Druckniveau des Speichers dem Lastzustand in gewünschter Weise anpassen, wobei bei Benutzung einer Leistungsdruckwaage die Anpassung sicher und reaktionsschnell erfolgt.

Hinsichtlich der Ansteuerung der Druckwaage ist die Anordnung so getroffen, dass die eine Seite des Steuerkolbens der Druckwaage über eine erste Steuerleitung mit dem jeweiligen Druckspeicher in Verbindung ist und dass die andere Seite des Steuerkolbens über eine zweite Steuerleitung mit der Arbeitsleitung oder mit einem Anschluss für die Zufuhr eines extern generierten Steuerdruckes verbindbar ist. Dadurch besteht die Möglichkeit, den jeweiligen Lastdruck der Arbeitsleitung unmittelbar an einer Seite des Steuerkolbens der Druckwaage wirken zu lassen, an dessen anderer Seite der Speicherdruck anliegt, oder alternativ anstelle des Lastdruckes der Arbeitsleitung einen in Abhängigkeit vom Lastdruck der Arbeitsleitung extern generierten Steuerdruck an der Druckwaage wirken zu lassen.

Mittels elektrischer Schaltsignale, die aufgrund der vom ersten und zweiten Drucksensor erkannten Druckwerten generiert sind, lassen sich erstes und zweites Steuerventil in der erforderlichen Entsprechung zum Zustand der Druckwaage bestromen, dass also bei der dem Ablasszustand entsprechenden Stellung der Druckwaage deren Tankanschluss zum Tank freigegeben ist oder dass bei der Ladestellung der Druckwaage deren Druckanschluss mit dem Speicher in Verbindung ist.

In vorteilhafter Weise kann eine Druckwaage in Form eines 3/3-Wege-Proportionalventils vorgesehen sein, das durch eine Federanordnung in die zentrale Sperrstellung vorgespannt ist.

Mit Vorteil kann die Anordnung hierfür so getroffen sein, dass die Arbeitsleitung über eine sperrbare oder freigebbare Zweigleitung mit der zweiten Steuerleitung verbindbar ist.

Bei besonders vorteilhaften Ausführungsbeispielen ist in erster und zweiter Steuerleitung jeweils eine dem Steuerkolben vorgeschaltete Blende angeordnet, beispielsweise in Form einer als dynamisches Dämpferglied wirksamen Messblende.

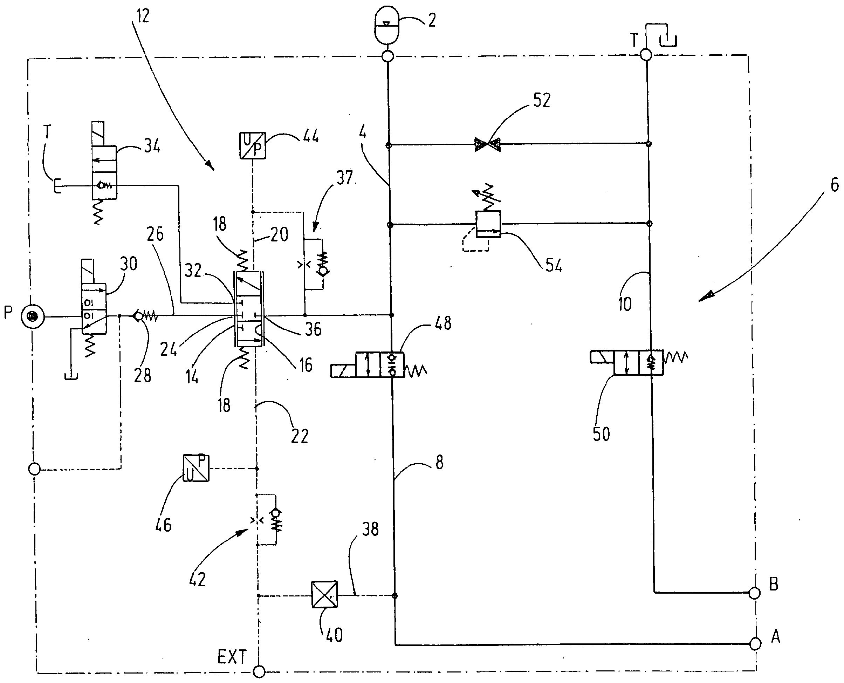

Nachstehend ist die Erfindung anhand eines in der Zeichnung dargestellten Ausführungsbeispieles im Einzelnen erläutert. Die einzige Figur zeigt in Symboldarstellung die Schaltung eines Hydrauliksystems mit einem Ausführungsbeispiel der erfindungsgemäßen Einrichtung.

Bei dem in der Zeichnung dargestellten Hydrauliksystem ist ein hydropneumatischer Druckspeicher 2 über eine Speicherleitung 4 mit einem Arbeitskreis 6 in Verbindung, der zur Druckversorgung eines Verbrauchers über eine mit der Speicherleitung 4 verbindbare Arbeitsleitung 8 vorgesehen ist, die zu einem Verbraucheranschluss A führt. Der zweite Verbraucheranschluss B ist über eine Tankleitung 10 mit einem Tank T verbindbar.

Ein den Ladezustand des Speichers 2 und den Druck der Speicherleitung 4 steuernder Lade- und Ablasskreis ist als Ganzes mit 12 bezeichnet. Dieser weist eine Leistungs-Druckwaage 14 in Form eines 3/3-Wegeventils in Form eines Proportionalventils auf, dessen Steuerkolben 16 durch eine Federanordnung 18 in eine sperrende Mittelstellung zentriert ist, aus der der Steuerkolben 16 mittels Steuerdrücken auslenkbar ist, die über eine erste Steuerleitung 20 und eine zweite Steuerleitung 22 an der einen Kolbenseite bzw. der anderen Kolbenseite des Steuerkolbens 16 wirksam sind. Ein Druckanschluss 24 der Druckwaage 14 ist über eine Versorgungsleitung 26, die über ein Rückschlagventil 28 abgesichert ist, und über ein erstes Steuerventil 30 mit einer Druckquelle P verbindbar, bei der es sich vorliegend um eine Hydropumpe handelt. Das erste Steuerventil 30 ist ein 3/2-Wegeventil, das elektrisch betätigbar ist. Ein Tankanschluss 32 der Druckwaage 14 ist über ein zweites Steuerventil 34 in Form eines elektrisch betätigbaren 2/2-Wegeventiles mit Tank T verbindbar. Als weiterer Anschluss der Druckwaage 14 ist ein Speicheranschluss 36 mit der Speicherleitung 4 in Verbindung.

An einem mit der Speicherleitung 4 verbundenen Speicheranschluss 36 ist der herrschende Ladedruck des Speichers 2 in der ersten Steuerleitung 20 und damit an der einen Seite des Steuerkolbens 16 der Druckwaage 14 wirksam, wobei dem Steuerkolben 16 eine Blende 37 vorgeschaltet ist. An der anderen Kolbenseite ist in der zugehörigen Steuerleitung 22 ein Steuerdruck wirksam, der mit dem in der Arbeitsleitung 8 des Arbeitskreises 6 wirksamen Lastdruck in Bezug steht. Bei dem vorliegenden Beispiel ist hierfür eine zwischen Arbeitsleitung 8 und Steuerleitung 22 gebildete Zweigleitung 38 vorgesehen, in der sich ein sperrbares Verbindungselement 40 befindet. Bei freigegebener Zweigleitung 38 führt die zweite Steuerleitung 22 den Druck der Arbeitsleitung 8, wobei dem Steuerkolben 16 der Druckwaage 14 in gleicher Weise wie bei der ersten Steuerleitung 20 wiederum eine Blende 42 vorgeschaltet ist. Bei geschlossener Zweigleitung 38 kann der zweiten Steuerleitung 22 von einem Steueranschluss EXT her ein Steuerdruck zugeführt werden, der mit dem Lastdruck in der Arbeitsleitung 8 in Bezug steht, jedoch extern generiert ist. Die in den Steuerleitungen 20 und 22 für Auslenkungen des Steuerkolbens 16 der Druckwaage 14 herrschenden Steuerdrücke werden von einem ersten Drucksensor 44 und einem zweiten Drucksensor 46 erkannt und signalisiert.

Für die Druckversorgung eines betreffenden Verbrauchers über die Anschlüsse A und B weist der Arbeitskreis 6 ein drittes Steuerventil 48 und ein viertes Steuerventil 50 auf. Durch Betätigen des dritten Steuerventiles 48 ist die Speicherleitung 4 mit der Arbeitsleitung 8 verbindbar. Durch Betätigen des vierten Steuerventiles 50 ist der Verbraucheranschluss B mit der Tankleitung 10 verbindbar. Zwischen Speicherleitung 4 und Tankleitung 10 befinden sich ein Absperrventil 52 und ein Druckbegrenzungsventil 54.

Bei dem über die Anschlüsse A, B zu versorgenden Verbraucher kann es sich um einen Arbeitszylinder verschiedenster Art handeln, als bevorzugtes Anwendungsbeispiel etwa um einen Federungszylinder einer hydropneumatischen Federung. Bei freigegebener oder aktivierter Federung sind durch Bestromen von elektrisch betätigbarem dritten Steuerventil 48 und elektrisch betätigbarem vierten Steuerventil 50 die beiden Kolbenseiten des (nicht gezeigten) Federungszylinders mit der Speicherleitung 4 bzw. mit der Tankleitung 10 in Verbindung.

Wenn die hydropneumatische Federung verriegelt ist, sind drittes Steuerventil 48 und viertes Steuerventil 50 im Sperrzustand, wie er in der Zeichnung dargestellt ist. Bei Änderungen der am Federungszylinder wirkenden Lastkräfte und den entsprechenden Änderungen des Lastdruckes in der Arbeitsleitung 8 ergibt sich über die Zweigleitung 38 eine entsprechende Änderung des Steuerdruckes in der zweiten Steuerleitung 22. Eine gegenüber der ersten Steuerleitung 20, die den Speicherdruck führt, sich ergebende Druckdifferenz führt zur Auslenkung der Druckwaage 14 im einen oder anderen Steuersinn, so dass der Speicheranschluss 36 der Druckwaage 14 entweder mit dem Druckanschluss 24 oder dem Tankanschluss 32 für einen Ladevorgang bzw. einen Ablassvorgang in Verbindung kommt. Eine die Auslenkung der Druckwaage 14 bewirkende Druckdifferenz in den Steuerleitungen 20 und 22 wird durch den Drucksensor 44 bzw. den Drucksensor 46 erkannt, die ein entsprechendes Signal für die Bestromung des ersten Steuerventils 30 oder des zweiten Steuerventils 34 für einen Ladevorgang bzw. Ablassvorgang liefern. Somit ergibt sich eine Anpassung des Ladezustandes des Speichers 2 an den jeweiligen, in der Arbeitsleitung 8 herrschenden Lastdruck. Bei einer Freigabe oder Aktivierung der Federung nach vorangegangener Sperrung befindet sich daher der Speicher 2 in einem angepassten Ladezustand, so dass beim Entsperren der Federung kein Drucksprung auftritt.

## Patentansprüche

1. Hydrauliksystem mit einer Einrichtung zum Steuern des Ladezustandes mindestens eines Druckspeichers (2), das Hydrauliksystem umfassend
- mindestens einen Druckspeicher (2),
- eine Druckquelle (P),
- einen Tank (T),
- eine mit dem jeweiligen Druckspeicher (2) verbindbare Arbeitsleitung (8) zur Druckversorgung eines Verbrauchers und
- einen Lade- und Ablasskreis (12) für wahlweises Verbinden des jeweiligen Druckspeichers (2) mit der Druckquelle (P) für einen Ladevorgang oder mit dem Tank (T) für einen Ablassvorgang, wobei der Lade- und Ablasskreis (12) eine Druckwaage (14) aufweist, deren Steuerkolben (16) aus einer zentralen Sperrstellung in eine den betreffenden Druckspeicher (2) mit der Druckquelle (P) verbindende Ladestellung oder in eine diesen mit dem Tank (T) verbindende Ablassstellung auslenkbar ist, wobei der Kolben (16) der Druckwaage (14) einerseits mit einem mit dem Druck des Druckspeichers (2) in Bezug stehenden und andererseits mit einem mit dem Druck der Arbeitsleitung (8) in Bezug stehenden Steuerdruck beaufschlagbar ist, wobei die eine Seite des Steuerkolbens (16) der Druckwaage (14) über eine erste Steuerleitung (20) mit dem jeweiligen Druckspeicher (2) in Verbindung ist und wobei die andere Seite des Steuerkolbens (16) über eine zweite Steuerleitung (22) mit der Arbeitsleitung (8) oder mit einem Anschluss (EXT) für die Zufuhr eines extern generierten, mit dem Lastdruck der Arbeitsleitung (8) in Bezug stehenden Steuerdruckes verbindbar ist, **dadurch gekennzeichnet,**
**dass** der Lade- und Ablasskreis (12) ein erstes Steuerventil (30), über das die Druckquelle (P) mit dem Druckanschluss (24) der Druckwaage (14) verbindbar ist, und ein zweites Steuerventil (34) aufweist, über das der Tankanschluss (32) der Druckwaage (14) mit dem Tank (T) verbindbar ist;
**dass** ein erster Drucksensor (44), der den am Steuerkolben (16) der Druckwaage (14) herrschenden Druck der ersten Steuerleitung (20) erkennt, sowie ein zweiter Drucksensor (46) vorgesehen sind, der den am Steuerkolben (16) herrschenden Druck der zweiten Steuerleitung (22) erkennt; und
**dass** erstes (30) und zweites Steuerventil (34) mittels Schaltsignalen betätigbar sind, die aufgrund der von erstem (44) und zweitem Drucksensor (46) erkannten Druckwerte generiert sind.

2. Hydrauliksystem nach Anspruch 1, **dadurch gekennzeichnet, dass** eine Druckwaage (14) in Form eines 3/3-Wege-Proportionalventils vorgesehen ist, das durch eine Federanordnung (18) in die zentrale Sperrstellung vorgespannt ist.

3. Hydrauliksystem nach Anspruch 1 oder 2, **dadurch gekennzeichnet, dass** die Arbeitsleitung (8) über eine sperrbare oder freigebbare Zweigleitung (38, 40) mit der zweiten Steuerleitung (22) verbindbar ist.

4. Hydrauliksystem nach einem der vorstehenden Ansprüche, **dadurch gekennzeichnet, dass** in erster (20) und zweiter Steuerleitung (22) jeweils eine dem Steuerkolben (16) vorgeschaltete Blende (37) bzw. (42) angeordnet ist.

5. Hydrauliksystem nach einem der vorstehenden Ansprüche, **dadurch gekennzeichnet, dass** erstes (30) und zweites Steuerventil (34) elektrisch betätigbar sind.

## Claims

1. Hydraulic system with a device for controlling the charge state of at least one pressure accumulator (2), the hydraulic system comprising
- at least one pressure accumulator (2),
- a pressure source (P),
- a tank (T),
- a working line (8) which can be connected to the respective pressure accumulator (2) for supplying pressure to a consumer and a charging and discharging circuit (12) for optionally connecting the respective pressure accumulator to the pressure source (P) for a charging operation or to the tank (T) for a discharging operation, wherein the charging and discharging circuit (12) has a pressure compensator (14), the control piston (16) of which can be deflected from a central locked position into a charging position connecting the relevant pressure accumulator (2) to the pressure source (P) or into a discharging position connecting the pressure accumulator to the tank (T), wherein the piston (16) of the pressure compensator (14) can be acted upon on the one hand by a control pressure related to the pressure of the pressure accumulator (2) and on the other hand by a control pressure related to the pressure of the working line (8), wherein the one side of the control piston (16) of the pressure compensator (14) is in communication with the respective pressure accumulator (2) via a first control line (20) and wherein the other side of the control piston (16) can be connected via a second control line (22) to the working line (8) or to a connection (EXT) for supplying an externally generated control pressure related to the load pressure of the working line (8), **characterised in that**
the charging and discharging circuit (12) comprises a first control valve (30) via which the pressure source (P) can be connected to the pressure connection (24) of the pressure compensator (14) and a second control valve (34) via which the tank connection (32) of the pressure compensator (14) can be connected to the tank (T);
**in that** a first pressure sensor (44), which detects the pressure of the first control line (20) prevailing at the control piston (16) of the pressure compensator (14), and a second pressure sensor (46), which detects the pressure of the second control line (22) prevailing at the control piston (16), are provided; and
**in that** the first (30) and second control valve (34) can be actuated by means of switching signals which are generated based on the pressure values detected by the first (44) and second pressure sensor (46).

2. Hydraulic system according to claim 1, **characterised in that** a pressure compensator (14) in the form of a 3/3-way valve is provided which is pretensioned into the central locked position by a spring arrangement (18).

3. Hydraulic system according to claim 1 or 2, **characterised in that** the working line (8) can be connected to the second control line (22) via a blockable or releasable branch line (38, 40).

4. Hydraulic system according to one of the preceding claims, **characterised in that** an orifice (37) and (42) respectively, connected upstream of the control piston (16), is arranged in each of the first (20) and second control lines (22).

5. Hydraulic system according to one of the preceding claims, **characterised in that** the first (30) and second control valves (34) can be operated electrically.

## Revendications

1. Système hydraulique comprenant un dispositif de commande de l'état de charge d'au moins un accumulateur (2) de pression, le système hydraulique comprenant
- au moins un accumulateur (2) de pression,
- une source (P) de pression,
- un réservoir (T),
- un conduit (8) de travail, qui peut être relié à l'accumulateur (2) de pression respectif pour l'alimentation en pression d'un consommateur, et
- un circuit (12) de charge et de décharge pour la liaison au choix de l'accumulateur (2) de pression respectif à la source (P) de pression pour une pression de charge ou au réservoir (T) pour une opération de décharge, dans lequel le circuit (12) de charge et de décharge a une balance (14) manométrique, dont le piston (16) de commande peut passer d'une position centrale d'arrêt en une position de charge mettant l'accumulateur (2) de pression concerné en communication avec la source (P) de pression ou en une position de décharge mettant cet accumulateur en communication avec le réservoir (T), dans lequel le piston (16) de la balance (14) manométrique d'une part peut être soumis à une pression de commande en relation avec la pression de l'accumulateur (2) de pression et d'autre part à une pression de commande en relation avec la pression du conduit (8) de travail, dans lequel l'un des côtés du piston (16) de commande de la balance (14) manométrique est en liaison avec l'accumulateur (2) de pression respectif par un premier conduit (20) de commande et dans lequel l'autre côté du piston (16) de commande peut, par un deuxième conduit (22) de commande, être relié au conduit (8) de travail ou à un raccord (EXT) pour l'apport d'une pression de commande produite extérieurement et en relation avec la pression de charge du conduit de travail, **caractérisé**
**en ce que** le circuit (12) de charge et de décharge a une première vanne (30) pilote, par laquelle la source (P) de pression peut communiquer avec le raccord (24) de pression de la balance (14) manométrique et une deuxième vanne (14) pilote, par laquelle le raccord (32) de réservoir de la balance (14) manométrique peut communiquer avec le réservoir (T) ;
**en ce qu'**il est prévu un premier capteur (44) de pression, qui détecte la pression, régnant au piston (16) de commande de la balance (14) manométrique, dans le premier conduit (20) de commande ainsi qu'un deuxième capteur (46) de pression, qui détecte la pression, régnant au piston (16) de commande, dans le deuxième conduit (22) de commande ; et
**en ce que** la première (30) et la deuxième vanne (34) pilote peuvent être actionnées au moyen de signaux de commutation, qui sont produits sur la base des valeurs de pression détectées par le premier (44) et le deuxième capteur (46) de pression.

2. Système hydraulique suivant la revendication 1, **caractérisé en ce qu'**il est prévu une balance (14) manométrique sous la forme d'une vanne proportionnelle à 3/3 voies, qui est précontrainte dans la position d'obturation centrale par un agencement (18) de ressort.

3. Système hydraulique suivant la revendication 1 ou 2, **caractérisé en ce que** le conduit (8) de travail peut communiquer avec le deuxième conduit (22) de commande par un conduit (38, 40) de dérivation pouvant être obturé ou dégagé.

4. Système hydraulique suivant l'une des revendications précédentes, **caractérisé en ce que** respectivement un obturateur (37) ou (42) monté en amont du piston (16) de commande est monté dans le premier (20) et dans le deuxième conduit (22) de commande.

5. Système hydraulique suivant l'une des revendications précédentes, **caractérisé en ce que** la première (30) et la deuxième vannes (34) pilotes peuvent être actionnées électriquement.
